Europäisches Patentamt

European Patent Office

Office européen des brevets

(19)

(11) Publication number : **0 359 295 B1**

(12) **EUROPEAN PATENT SPECIFICATION**

(45) Date of publication of patent specification : **11.11.92 Bulletin 92/46**

(51) Int. Cl.[5] : **A23C 19/032**

(21) Application number : **89201832.6**

(22) Date of filing : **10.07.89**

(54) Method for the preparation of cheese.

(30) Priority : **22.07.88 NL 8801861**

(43) Date of publication of application : **21.03.90 Bulletin 90/12**

(45) Publication of the grant of the patent : **11.11.92 Bulletin 92/46**

(84) Designated Contracting States : **BE DE FR NL**

(56) References cited :
EP-A- 0 281 167
THE AUSTRALIAN JOURNAL OF DAIRY TECHNOLOGY, vol. 35, no. 4, December 1980, pages 137-139, Parkville, Victoria, AU; G.T. LLOYDet al.: "The effect of yoghurt culture YB on the flavour and maturation of cheddar cheese"
FOOD SCIENCE & TECHNOLOGY AB-STRACTS, no. 83-06-P0841 (83033720); KH. ROCHA et al.: "The microbiological and biochemicaltesting of Cuban cows' milk cheese patagras", & NAUCHNI TRUDOVE, vol. 26, no. 2, pages 275-281, 1979
CHEMICAL ABSTRACTS, vol. 95, no. 6, September 1981, page 479, abstract no. 95667w, Columbus, Ohio, US; K. BUTKUS et al.: "Newstarter for Cheddar cheese", & MOLOCHN. PROM-ST. 1981, (7),14-16

(56) References cited :
CHEMICAL ABSTRACTS, vol. 102, no. 19, May 1985, page 509, abstract no. 165444k, Columbus, Ohio, US; M. OSTOJIC et al.: "Production of white soft cheese from ultrafiltrated milk", & MLJEKARSTVO 1984, 34(12), 365-70
FOOD SCIENCE & TECHNOLOGY AB-STRACTS, no. 69-04-B0163 (69012216); K. LEBEDEVA et al.: "Study of different starters incheddar cheese manufacture", & MOLOCHNAYA PROMYSHLENNOST, vol. 29, no. 12, pages 7-11, 1968
S.E. GILLILAND: "Bacterial starter cultures for foods", 1985, pages 138-140,147-152, CRC Press Inc., Boca Ration, Florida, US

(73) Proprietor : **NEDERLANDS INSTITUUT VOOR ZUIVELONDERZOEK**
Kernhemseweg 2 P.O. Box 20
NL-6710 BA Ede (Gld) (NL)

(72) Inventor : **Exterkate, Fredericus Antonius**
Spinetstraat 23
NL-6544 WE Nijmegen (NL)
Inventor : **De Veer, Gerardus Johanna Christina Maria**
Zomerdijk 57
NL-5391 BV Nuland (NL)

(74) Representative : **de Bruijn, Leendert C. et al**
Nederlandsch Octrooibureau
Scheveningseweg 82 P.O. Box 29720
NL-2502 LS Den Haag (NL)

## Description

The invention relates to a method for the preparation of cheese in which both mesophilic and thermophilic bacteria are used.

Each type of cheese has a number of characteristics, such as consistency, structure, degree of eye formation and aroma (smell and flavour). Said characteristics are dependent on, inter alia, the method of preparation and the nature of the additives. In the case of the preparation of matured cheese, the bacteria added to the milk to be processed play an essential role. In the first place, under the influence of the starter culture consisting of lactic acid bacteria, the necessary fall in pH is achieved as a consequence of the conversion of lactose to lactic acid. This fall in pH has a great influence on the consistency of the cheese. Moreover, the lactic acid bacteria to a very great extent influence the cheese ripening process by the breakdown of substances such as protein and citric acid with the formation of, inter alia, aroma substances. Types of cheese for which cheese ripening is mainly dependent on the starter used are, for example, Gouda, Edam and Cheddar cheese.

In the preparation of other types, yet further microbiological systems are used in addition to the starter consisting of lactic acid bacteria in order to form the aroma characteristic for these types of cheese: surface mould (for example Brie and Camembert), surface bacteria (Limburger, Romadur) or internal mould (Roquefort). The addition of propionic acid bacteria which are activated by storing the cheese for some time at a somewhat higher temperature is also known (Emmentaler, Maasdammer). With most other types of cheese, a specific conversion which contributes to the aroma development is stimulated by added enzymes, such as an intensified fat splitting by lipases in the case of some types of Italian cheese.

Now it is known to add, in addition to the starter bacteria which must effect the desired acidification, yet further lactic acid bacteria which have no or little influence on the course of acidification but which are able to intensify the flavour of the product. Thus, the addition of extra lactic acid bacteria in addition to the customary starter has been carried out in the framework of an investigation into the possibility of accelerating cheese ripening, with the aim of causing the aroma characteristic of a specific type of cheese to develop in an earlier stage of ripening, without changing this aroma (Neth. Milk Dairy J. 15 (1961) 151-164). It has been found that relatively high concentrations of cells are necessary for this accelerated ripening: at least a 5-fold increase. The addition of extra lactic bacteria has a highly adverse effect on the consistency, the structure and the aroma of the cheese as a consequence of too high an acidification activity. Specifically, the shortcoming termed "bitter" is noted as one of the negative consequences. Attempts have been made to prevent the said adverse effects by selectively inactivating the acid-forming power of the cells of the bacterial strain (or strains) to be added by subjecting these cells to a special pre-treatment such as "freeze shock" or "thermo shock". On the other hand it is attempted to make use of (lac⁻) mutants which are non-acidifying in milk. In this case different difficulties are encountered which are to be ascribed to an incomplete proteolytic system of the mutant. Despite the great increase in the number of cells (12-15-fold) in the cheese, a very slight effect on the proteolysis and thus an only moderate effect on the ripening is detected (Austr. J. Dairy Technol. 38 (1983) 55-58).

In EP-0 078 813 a method is described for giving more taste to cheese with an appreciably lowered fat content, in which taste development is slow and weak, by separately adding a few cultures of thermophilic lactic acid bacteria in addition to the customary starter and, in a later stage, after draining off some of the whey, adding a quantity of salt water. In accordance with this method cheeses of a certain type such as Cheddar or Edam with a greatly reduced fat content nevertheless acquire the desired taste. In this case also there is apparently some form of accelerated ripening. A practical drawback of this method for generating the flavour belonging to the original type of cheese is that the various strains all have to be cultured separately in order to prevent the irrevocable shift in the composition of the whole during growth of the mixture. Another disadvantage of this method is that it is directed solely to flavour development in low-fat cheese.

It has now been found that by using a particular mixed culture as the culture of thermophilic bacteria the said drawbacks can be avoided.

With the method according to the invention, in addition to the starter customary for a specific type of cheese, a special mixed culture $APS_{13}$, consisting of various strains of thermophilic lactic acid bacteria, is added. This mixture of lactobacilli and streptococci has been deposited under No. CBS 483.86 with the Centraal Bureau voor Schimmelcultures (Central Office for Mould Cultures), Baarn. At the preparation temperatures customary for the preparation of cheese with the aid of a mesophilic starter, the course of acidification is determined by the (mesophilic) starter even when the said thermophilic culture has been added. Furthermore, the acidifying power of a $APS_{13}$ culture can be reduced further by adjusting the culturing process.

"Mesophilic" and "thermophilic" are concepts which are not always defined in the same way. In the present description "mesophilic" is used to indicate lactic acid bacteria which exhibit an optimum growth at below 33°C; the "thermophilic" mixture $APS_{13}$ exhibits an optimum growth at above 40°C.

In contrast to the known methods described above for the use of mesophilic and thermophilic lactic bacteria, the use of $APS_{1}3$ is found to effect a drastic change in the flavour of the product, compared with that of the same type of cheese which has been prepared without the addition of $APS_{13}$. A panel for sensory evaluation, practised in analytical testing and particularly in establishing flavour profiles, established that the use of $APS_{13}$ leads to a flavour profile which is completely different from that of, for example, Gouda cheese, but also from that of Emmentaler or other types for which thermophilic bacteria are used in the preparation. The combination of the following flavour elements is characteristic:

- slightly fruity/ester-like
- a sweet element which clearly differs from the "sweet/propionic acid-like" touch for Emmentaler and Maasdammer
- piquant
- bouillon-like
- somewhat nutty

It is striking that the characteristic flavour is not obtained if thermophilic monocultures, which may or may not be derived from $APS_{13}$, are used instead of $APS_{13}$.

In view of the relatively low dosage of the extra lactic acid bacteria it is surprising that when this method is used the development of this new aroma is already noticed in young cheese. This method thus also offers the possibility of developing (semi-) hard types of cheese with a rapid ripening process which is not known for (semi-) hard cheeses and is so typical of the known soft cheese types. An additional advantage is that no costs are incurred for the relatively long storage of the traditional (semi-) hard cheeses.

Another advantage of the method according to the invention is that those starters which are known to have a tendency to give rise to the shortcoming "bitter" in the cheese can also be used for the acidification: when the present method is employed these starters can be used without causing the said shortcomings. This is the more striking because it is precisely with the attempts to achieve accelerated ripening that the shortcoming "bitter" is frequently noticed.

An unexpected advantage of the use of $APS_{13}$ is, moreover, that the cheeses are appreciably less susceptible to the shortcoming "late blowing": the mixed culture is found to suppress to a great extent the undesired butyric acid bacterial fermentation which leads to the said shortcoming.

Another unexpected aspect of the use of $APS_{13}$ is that despite the presence of a relatively high number of thermophilic lactobacilli the shortcoming "pink" does not arise. It is known that many strains of thermophilic lactobacilli can cause an objectionable discoloration of the cheese (Bottazzi and Coradini, Sci.Tec.Latt.-cas. 17 (1966) 384; Shannon and Olson, J. Dairy Sci. 52 (1969) 1678).

It is desirable to culture the $APS_{13}$ as a mixture;

the monocultures derived from the mixed culture are separately found to grow poorly in milk. Moreover, of course, the culture and storage procedures would have to be adapted for each monoculture, which is a drawback for large-scale use.

The mixture can be cultured with or without pH control; preferably, however, the thermophilic culture is grown in milk at a constant pH value. In either case it is preferred to maintain the culture in a condition wherein little or no formation of lactic acid occurs, for some time.

The technique of culturing at constant pH by neutralizing the lactic acid formed is known to those skilled in the art. Preferably, a pH value between 5.5 and 6.0 is chosen; at each value within this range an advantageous ratio between the numbers of lactobacilli and streptococci is obtained such that the lactobacilli greatly predominate.

The method according to the invention is not restricted to preparation processes in which the bacteria are added to the milk; the present method can also be employed in the case of processes in which the milk is concentrated beforehand or in which - as described in Dutch Patent Applications 78.08432 and 80.06323 - the bacteria and the coagulant are added to a concentrate of milk constituents with a moisture content which approaches that of the cheese to be prepared. Equally the method is not restricted to the preparation of cheeses which are salted in a brine bath; thus, it can fruitfully be used in the preparation of cheeses such as Cheddar and Friesian Kanter, for which the salt is mixed through the curds.

Of course, various combinations of starter and extra culture to be added are possible when using the method according to the invention; a person skilled in the art can arrive at the combination which he desires by simple testing. In order to maintain the chosen composition of the extra culture to be added, a concentrate of this culture is preferably used.

The nature of the mesophilic starter used in the method according to the invention is not vital. Any commercially available starter can be used.

The following examples serve to illustrate the method according to the invention.

Example 1

2100 litres of raw milk (2.7% m/v fat) were pasteurized for 4.5 s at 75°C and then cooled to 30.5°C. 0.5% (v/v) Bos (a BD starter, described in Neth. Milk Dairy J. 38 (1984), p. 157-181; IDF Bulletin 129 (1980) p. 24; and Neth. Milk Dairy J. 29 (1975), p. 335-353), 315 g sodium nitrate, 210 g calcium chloride and 420 ml coagulant (strength 10,800 Soxhlet units, meaning that 1 ml of coagulant (rennet) can initiate coagulation of 10,800 ml of milk in 40 minutes at 35°C) were then added to the milk. In addition 2% (v/v) $APS_{13}$ were added: a thermophilic culture of lactic acid bacteria which was cultured at a constant pH value (5.8) and was neutralized to a pH value of 6.5 with the aid of caustic solution. After a coagulation time of 25 minutes and cutting for 20 minutes, 40% (v/v) whey was drained off. By adding 30% (v/v, calculated on the remaining amount of whey and curds) warm water, the total mass was brought to 36°C. It was then stirred for a further 33 minutes, after which the curds were allowed to settle. After the remaining loose whey had run off, the curds were transferred to circular 12-kg cheese vats and pressed as is customary for Gouda cheese. When the pH of the cheese had reached a value of 5.3 5½ hours after the addition of the coagulant, the cheeses were transferred to brine (strength 19% w/w NaCl (18° Bé)). After brining for 88 hours, the cheeses were provided with a layer of cheese coating agent and then stored at 13°C and 88% relative atmospheric humidity.

On assessment by a group of experienced cheese testers, the flavour profile of this cheese was found to be noticeably different from that of Gouda cheese of the same age even through its method of preparation is similar to that of the Gouda cheese.

After a ripening period of seven weeks, a sweet and a fruity flavour were noticed in the first place; after ripening for three months, the fruit/ester-like flavour in particular had increased somewhat. A cheese from another lot produced in the manner described was found to be clearly recognizable after five months by the sweet and fruity/ester-like flavour with, in addition, a slight hint of bouillon flavour.

## Example 2

200 litres of raw milk (2.5% m/v fat) were pasteurized for 10 s at 74°C and then cooled to 31°C. 3% (v/v) Fr 19 (a BD starter, described in Neth. Milk Dairy J. 38 (1984), p. 157-181; IDF Bulletin 129 (1980) p. 24; and Neth. Milk Dairy J. 29 (1975), p. 335-353), 2% APS$_{13}$, 30 g sodium nitrate, 20 g calcium chloride and 40 ml coagulant (strength 10,800 Soxhlet units) were then added to the milk. After a coagulation time of 30 minutes and cutting for 20 minutes, 30% (v/v) whey were drained off. By warming the walls of the cheese vat with steam, the contents of the vat were brought to 31°C again with stirring, after which the cheese was stirred for a further 25 minutes. The curds were then allowed to settle and subsequently an amount of whey was drained off such that a layer of whey 5 to 10 centimetres high remained above the curds. The curds were worked intensively and after the curds had settled again the residual loose whey was drained off. The curds were transferred to Edam cheese vats made of plastic and pressed for one hour in the conventional manner. Pressing started one hour after the end of the curd processing. After pressing, the cheese was allowed to move round for a further 1½ hours; the cheese was then brined for 66 hours (brine strength 19% w/w NaCl (18° Bé)), dried and provided with a layer of cheese coating agent. The cheese was stored at 13°C and 88% relative atmospheric humidity.

After a ripening time of six weeks, a group of experienced testers judged that the cheese had a fresh acid flavour. After ripening for three months a nutty and a bouillon-like flavour component were noticed in particular. The flavour profile of this cheese was, moreover, highly rated because the typical tartness of the "crumbly Edam" was much less pronounced, while the structure of this type of cheese was present.

## Example 3

2000 litres of raw milk (2.5% m/v fat) were pasteurized for 4.5 s at 75°C and then cooled to 30°C. 2.3% (v/v) Fr 18 (a B starter, described in Neth. Milk Dairy J. 38 (1984), p. 157-181), 2% (v/v) APS$_{13}$, 300 g sodium nitrate, 200 g calcium chloride and 400 ml coagulant (strength 10,800 Soxhlet units) were then added to the milk. After a coagulation time of 25 minutes and cutting for 20 minutes, 30% (v/v) whey were drained off. By adding 15% (v/v, calculated on the remaining amount of whey and curds) warm water, the total mass was brought to 32°C. The mass was then stirred for a further 60 minutes, after which the curds were allowed to settle. After the supernatant whey had been drained off, the curds were allowed to acidify further, the whey emerging being able to run off freely.

4¼ hours after the addition of the coagulant, the pH of the curds had reached a value of 5.28; the curds were then ground with the aid of a Friesian curd mill. The ground curds were mixed with a total of 5.7 kg common salt and then transferred to 8-kg cheese vats of the Friesian kanter type. After pressin for 1 hours, the cheese was heated for 2 minutes in water at 45°C and then further pressed for 11 hours. Finally, the cheese was brined for 18 hours (brine strength 19% w/w NaCl (18° Bé)), dried and provided with a layer of cheese coating agent. The cheese was stored at 13°C and 88% relative atmospheric humidity.

After ripening for three months, the cheese had acquired a very pronounced flavour with a somewhat sweet, ester-like and in addition clear bouillon-like character. The structure was somewhat crumbly.

## Example 4

2500 litres of milk (3.4% m/v protein; 1.75% fat; 4/6% m/v lactose; 8.7% m/v fat-free dry matter) was concentrated at 50°C by means of ultrafiltration until the protein content had increased by a factor of 6. During the ultrafiltration the lactose content was adjusted to 1.6% (m/v) by continuous addition of water. The retained substance was then further concentrated at a temperature below 65°C with the aid of a scraped evaporator to a dry matter content of 43% (m/v).

After the concentrate had been cooled to 31°C with the aid of a scraped condenser, 0.25% (v/m) of a Bos starter concentrate (see Neth. Milk Dairy J. 38 (1984), p. 157-181) (concentration factor 40); 1.5% (v/m) of an $APS_{13}$ concentrate (concentration factor 4) and 0.25% of a mixture of coagulant and nitrate were added to the concentrate; the last-mentioned mixture consisted of 4 parts by weight of coagulant (strength 10,800 Soxhlet units), 1 part by weight sodium nitrate (50% m/v) and 16 parts by weight water.

The concentrate containing the said additives was then passed through a second scraped condenser serving as a dynamic mixer and transferred to rectangular, lecithin-treated 2-kg cheese vats made of plastic. After moving around (20 hours), the cheese blocks were brined for 8 hours in brine with a strength of 19% w/w NaCl (18° Bé), dried and packed in polyvinylidene chloride, trademark Cryovac ®. The product was stored at 13°C.

A characteristic flavour with the components "bouillon", sweet and nutty developed during storage.

In contrast to this, the cheese products of this type which are prepared without the addition of $APS_{13}$ but otherwise in the same manner have a bland flavour.

## Claims

1. Method for the preparation of cheese in which both a mesophilic starter containing lactic acid bacteria exhibiting an optimum growth at below 33°C, and a culture of thermophilic lactic acid bacteria are used, characterized in that the mixed culture $APS_{13}$ (CBS 483.86) is used as the culture of thermophilic bacteria.

2. Method according to Claim 1, characterized in that the mixed culture $APS_{13}$ has been grown at a constant pH value in milk.

3. Method according to Claim 2, characterized in that the pH value is between 5.5 and 6.0.

4. Method according to one of Claims 1-3, characterized in that the mixed culture $APS_{13}$ is used in the form of a bacterial concentrate.

5. Method according to one of Claims 1-4, characterized in that the mixed culture $APS_{13}$ is added to a concentrate of milk constituents.

## Patentansprüche

1. Verfahren zur Herstellung von Käse, bei dem sowohl ein mesophiler Starter, welcher Milchsäurebakterien mit einem optimalen Wachstum bei unterhalb 33°C enthält, und eine Kultur von thermophilen Milchsäurebakterien verwendet werden, **dadurch gekennzeichnet,** daß die gemischte Kultur $APS_{13}$ (CBS 483.86) als Kultur der thermophilen Bakterien verwendet wird.

2. Verfahren nach Anspruch 1, **dadurch gekennzeichnet,** daß die gemischte Kultur $APS_{13}$ bei einem konstanten pH-Wert in Milch gezüchtet worden ist.

3. Verfahren nach Anspruch 2, **dadurch gekennzeichnet,** daß der pH-Wert zwischen 5,5 und 6,0 liegt.

4. Verfahren nach einem der Ansprüche 1 bis 3, **dadurch gekennzeichnet,** daß die gemischte Kultur $APS_{13}$ in Form eines Bakterienkonzentrats verwendet wird.

5. Verfahren nach einem der Ansprüche 1 bis 4, **dadurch gekennzeichnet,** daß die gemischte Kultur $APS_{13}$ zu einem Konzentrat von Milchbestandteilen zugegeben wird.

## Revendications

1. Procédé de préparation de fromage dans lequel sont utilisées tant une culture de départ mésophilique contenant des bactéries d'acide lactique présentant une croissance optimale au-dessous de 33°C qu'une culture de bactéries d'acide lactique thermophiliques, caractérisé en ce que la culture mixte $APS_{13}$ (CBS 483.86) est utilisée comme culture de bactéries thermophiliques.

2. Procédé suivant la revendication 1, caractérisé en ce que la culture mixte $APS_{13}$ a été cultivée à une valeur de pH constante dans du lait.

3. Procédé suivant la revendication 2, caractérisé en ce que la valeur du pH est comprise entre 5,5 et 6,0.

4. Procédé suivant l'une des revendications 1 à 3, caractérisé en ce que la culture mixte $APS_{13}$ est utilisée sous forme d'un concentré bactériel.

5. Procédé suivant l'une des revendications 1 à 4, caractérisé en ce que addition mixte $APS_{13}$ est ajoutée à un concentré de composants de lait.